# FASCICULE DE BREVET EUROPEEN

(11) **EP 2 318 279 B1**
(45) Date de publication et mention de la délivrance du brevet: **28.11.2012**
(21) Numéro de dépôt: 09737077.9
(22) Date de dépôt: 17.07.2009
(51) Int. Cl.: B64F 1/12

(54) **TETE DE HARPON AMELIOREE ET HARPON CORRESPONDANT**
VERBESSERTER HARPUNENKOPF UND ENTSPRECHENDE HARPUNE
IMPROVED HARPOON HEAD AND CORRESPONDING HARPOON

(30) Priorité: 21.07.2008 FR 0854938
(43) Date de publication de la demande: 11.05.2011
(73) Titulaire: DCNS, 75015 Paris (FR)
(72) Inventeur: PROUTIERE, Séverine, F-16600 Magnac sur Touvre (FR)
(74) Mandataire: Domenego, Bertrand
(86) Numéro de dépôt international: PCT/FR2009/051430
(87) Numéro de publication internationale: WO 2010/010279

(56) Documents cités:
- EP-A- 0 611 693
- EP-A- 0 631 930
- WO-A-91/04910
- GB-A- 1 177 751
- NL-A- 6 602 621

## Description

La présente invention concerne un système d'ancrage d'un aéronef sur une grille. Plus particulièrement, l'invention concerne un système d'ancrage du type comportant un harpon porté par l'aéronef et actionné pour qu'une tête du harpon vienne s'ancrer dans une alvéole de la grille.

Le document FR 2 701 689 A1 décrit un harpon équipant un aéronef et pouvant être tiré en direction d'une grille d'appontage d'un navire afin que la tête du harpon se fixe sur la grille et forme un point d'ancrage de l'aéronef, facilitant l'opération d'appontage de l'aéronef. Selon ce document, la tête de harpon comporte une portion centrale cylindrique d'axe A, et une portion d'extrémité conique. La portion centrale comporte des doigts orientés et mobiles radialement entre une position escamotée et une position sortie. La tête de harpon comporte également des moyens pour entraîner et retenir en position sortie les doigts en réponse à la pénétration de la tête de harpon dans une alvéole de la grille, de sorte que les doigts fassent saillie au-dessous de la grille et empêchent le désengagement du harpon.

Le document WO 91/04910 divulgue un moyen de retenue situé à l'extrémité d'un harpon et comportant une partie de pointe destinée à venir s'engager dans une alvéole de la grille d'appontage, et une paire de pinces, située en retrait de la partie de pointe et destinée à se refermer autour d'un montant de la grille après engagement de la partie de pointe dans une alvéole. La partie de pointe est munie d'une pièce rapportée en un matériau durci possédant une forme conique.

Lors du tir du harpon, la probabilité est importante que l'extrémité distale de la tête de harpon entre en contact avec une surface d'arêtes de la grille, définie par l'ensemble des cols séparant des alvéoles voisines de la grille. Le mouvement du harpon étant essentiellement normal à la surface d'arêtes de la grille, le harpon rebondit sur la grille et l'ancrage de l'aéronef ne se fait pas. Il est nécessaire de réamorcer le système d'ancrage avant de tenter une nouvelle phase d'appontage de l'aéronef.

De plus, au cours de l'utilisation du harpon, la répétition des chocs entre la tête de harpon et la grille finit par émousser l'extrémité distale de la tête de harpon. Celle-ci s'aplatit, de sorte que la tête de harpon présente une face d'extrémité normale à l'axe du harpon. En retour, la présence de cette face d'extrémité augmente la probabilité que la tête de harpon entre en contact avec la surface d'arêtes de la grille. Lorsque la tête de harpon est trop usée pour un ancrage efficace, il est alors nécessaire de la remplacer, ce qui, compte tenu de sa structure complexe, représente un coût important.

L'invention a pour but de pallier les problèmes précités.

Pour cela, l'invention porte sur une tête de harpon pour un système d'ancrage d'un aéronef sur une grille, caractérisée en ce qu'une extrémité distale de la tête de harpon est munie d'une pièce rapportée, interchangeable.

Suivant l'un des modes particuliers de l'invention, la tête de harpon comporte une ou plusieurs des caractéristiques suivantes, prise(s) isolément ou suivant toutes les combinaisons techniquement possibles :
- la pièce rapportée présente une forme adaptée pour que la tête de harpon puisse glisser sur une surface d'arêtes de la grille pour se loger dans une alvéole de la grille ;
- la pièce rapportée est de forme cylindrique, et présente une extrémité biseautée de manière à munir la pièce rapportée d'une face inclinée de contact avec la grille ;
- l'axe B de la pièce rapportée est confondu avec un axe de la tête de harpon ;
- une arête de la pièce rapportée reliant la face inclinée et une surface latérale de la pièce est arrondie, et le rayon de l'arête arrondie est inférieur à deux millimètres ;
- la pièce rapportée est réalisée en un matériau métallique présentant une dureté supérieure à celle du matériau constitutif de la tête de harpon, de préférence en un acier, et de préférence encore en un acier de formule 30CrMo12 ;
- l'extrémité distale de la tête de harpon comporte un logement de réception de la pièce rapportée ;
- la tête de harpon comporte des moyens de fixation aptes à coopérer avec des moyens de fixation conjugués prévus sur la pièce rapportée pour fixer, de manière interchangeable, la pièce rapportée sur la tête de harpon ;

L'invention porte également sur un harpon caractérisé en ce qu'il est muni d'une tête de harpon telle que celle qui vient d'être définie.

L'invention et ses avantages seront mieux compris à la lecture de la description qui va suivre, donnée uniquement à titre d'exemple et faite en se référant aux dessins annexés dans lesquels :
- la figure 1 est une vue générale d'un système d'ancrage comportant un harpon et une grille ; et,
- la figure 2 est une coupe axiale d'une tête de harpon du harpon de la figure 1.

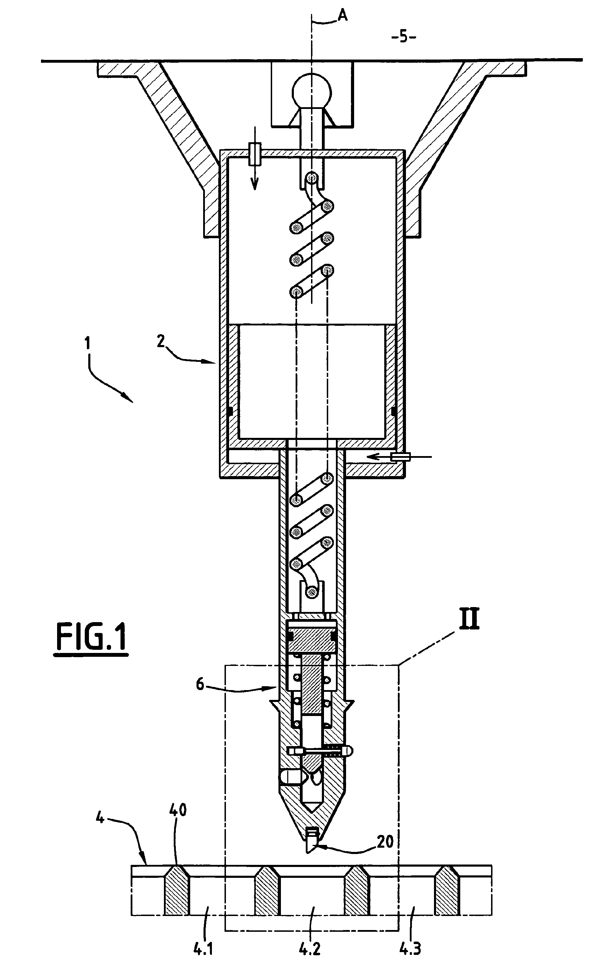

En se référant à la figure 1, un système d'ancrage 1 d'un aéronef sur un ponton comporte un harpon 2 et une grille 4. La grille 4 présente une surface supérieure plane comportant une pluralité d'alvéoles 4.1, 4.2, 4.3. Le harpon 2 est disposé sous le fuselage 5 de l'aéronef, tandis que la grille 4 est disposée sur le ponton sur lequel l'aéronef peut atterrir. Le harpon 2 a une forme oblongue selon un axe A. Une extrémité distale du harpon 2, située à l'écart de l'aéronef 5 portant le harpon 2, est munie d'une tête de harpon 6 apte à coopérer avec une alvéole 4.1, 4.2, 4.3 de la grille 4, lors de l'opération d'ancrage de l'aéronef.

Afin d'immobiliser l'aéronef sur le pont, le harpon est tiré après la phase d'approche, dès que l'aéronef rentre en contact avec le pont.

La tête de harpon 6 vient se loger dans l'une des alvéoles de la grille 4. A cet instant des moyens d'ancrage sont actionnés pour empêcher le retrait de la tête du harpon 6 de l'alvéole. Ainsi ancré, l'atterrissage de l'aéronef 5 s'achève par la rétraction du harpon 2 en synchronisation avec l'arrêt du système de propulsion de l'aéronef 5.

La tête de harpon 6 présente une portion centrale 7, de forme sensiblement cylindrique autour de l'axe A, et une portion d'extrémité 8, de forme sensiblement conique. La tête de harpon 6 est connectée, par sa portion centrale 7, au corps du harpon 2. Le diamètre de la portion conique 8 de la tête de harpon 6, va en se réduisant lorsque l'on se déplace le long de l'axe A, orienté du fuselage 5 de l'aéronef vers la grille 4, c'est-à-dire de haut en bas sur la figure 1.

La portion conique 8 se termine par une face d'extrémité distale 10 qui est normale à l'axe A. La face d'extrémité distale 10 est munie d'un alésage 12 d'axe A. L'alésage 12 constitue un logement de réception d'un grain 20 qui va maintenant être décrit en détail.

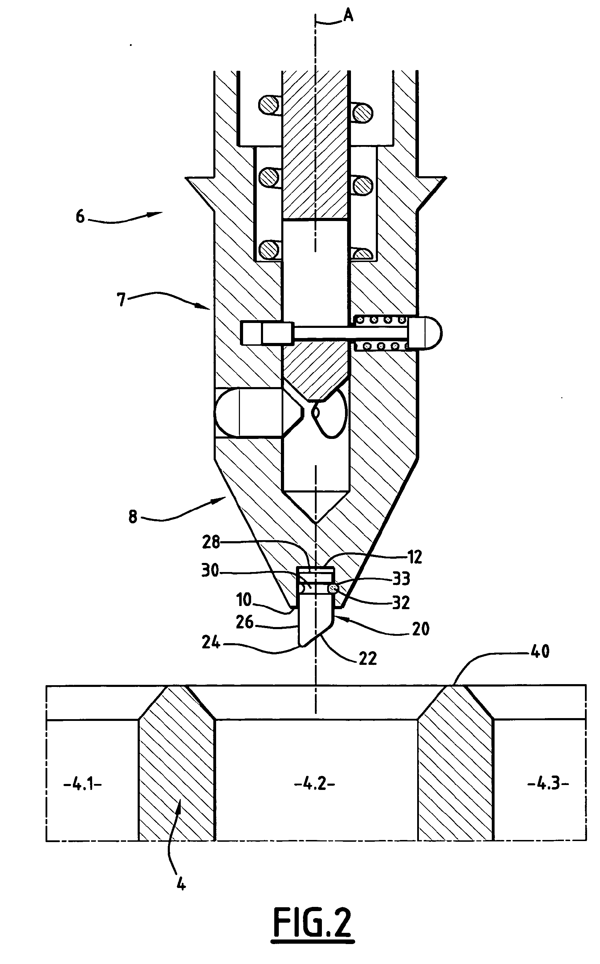

En se référant à la figure 2, le grain 20 est une pièce d'usure rapportée sur la tête de harpon 6. Le grain 20 a la forme d'un cylindre de révolution autour d'un axe B. Le grain 20 est logé dans l'alésage 12 de la tête de harpon 6 de sorte que l'axe B coïncide avec l'axe A. Une extrémité du grain 20, destinée à s'étendre hors de l'alésage 12 pour pouvoir entrer en contact avec la grille 4, est biseautée de sorte que le grain 20 est muni d'une face inclinée 22 par rapport à l'axe A.

Une arête 24 de jonction entre la face inclinée 22 et la surface latérale 26 du grain 20 est arrondie. L'arête 24 présente un rayon de courbure inférieur à deux millimètres et de préférence égal à un millimètre.

L'autre extrémité du grain 20 présente une face d'extrémité radiale 28, c'est-à-dire normale à l'axe B, destinée à venir en vis-à-vis du fond de l'alésage 12.

Pour fixer le grain 20 à la tête de harpon 6, le grain 20 comporte un moyen de fixation apte à coopérer avec un moyen de fixation conjugué prévu sur la tête de harpon 6. Dans le mode de réalisation décrit sur les figures, au voisinage de la face radiale 28, la surface latérale 26 du grain 20 comporte une gorge 30 semi-circulaire. Par ailleurs, la tête de harpon 6 est munie d'une goupille élastique 32 logée dans un trou 33 traversant la portion d'extrémité 8 de part en part. Un axe du trou traversant 33 est perpendiculaire à l'axe A et est tangent à l'alésage 12, à la hauteur de la gorge 30 du grain 20. En position assemblée du grain 20 sur la tête de harpon 6, la goupille 32, insérée dans le trou traversant 33, coopère avec la gorge 30. Ainsi, le grain 20 est empêché de sortir de l'alésage 12 par un mouvement de translation le long de l'axe A, mais est libre en rotation autour de l'axe A.

De tels moyens de fixation permettent de changer aisément le grain 20. Le grain 20 est réalisé en un matériau métallique présentant une dureté élevée par rapport au matériau constitutif de la tête de harpon 6. Par exemple, un acier de formule 30CrMo12 est utilisé pour le grain 20.

Lors d'une tentative d'ancrage de l'aéronef sur la grille 4, le harpon est tiré vers la grille 4. Si la tête de harpon 6 doit entrer en contact avec la grille 4, elle le fait par l'intermédiaire du grain 20. Dans le cas défavorable où la face inclinée 22 du grain 20 vient en contact d'une surface d'arêtes 40 de la grille 4, définie par les cols séparant des alvéoles voisines, telles que les alvéoles 4.1 et 4.2, le contact entre la face inclinée 22 et la surface d'arêtes 40 se fait selon l'arête arrondie 24. La force de harponnage étant orientée selon l'axe A, le point de contact se situe hors de l'axe A. Un couple est alors généré qui tend à faire basculer la tête de harpon 6, dans un plan vertical, autour du point de contact jusqu'à ce que le contact entre le grain 20 et la surface d'arêtes 40 se fasse selon le plan de la face inclinée 22 du grain 20. Alors, l'angle entre la face inclinée 22 et l'axe A est adapté pour que le harpon 2 glisse sur la surface d'arêtes 40 pour venir se loger dans l'une ou l'autre des alvéoles 4.1 et 4.2.

Eventuellement, lors du contact du grain 20 avec la surface d'arêtes 40, un couple autour de l'axe A permet au grain 20 de tourner dans l'alésage 12, autour de l'axe A, de manière à venir en contact avec la surface d'arêtes 40 sur la majeure partie de la face inclinée 22.

## Revendications

1. Tête de harpon (6) pour un système d'ancrage d'un aéronef sur une grille (4), dont une extrémité distale est munie d'une pièce rapportée (20), interchangeable, présentant une forme adaptée pour que la tête de harpon (6) puisse glisser sur une surface d'arête (40) de la grille (4) pour se loger dans une alvéole (4.1, 4.2, 4.3) de la grille, **caractérisée en ce que** la pièce rapportée (20) est de forme cylindrique et présente une extrémité biseautée de manière à munir la pièce rapportée d'une face inclinée (22) de contact avec la grille.

2. Tête de harpon selon la revendication 1, **caractérisée en ce que** l'axe B de la pièce rapportée est confondu avec un axe (A) de la tête de harpon.

3. Tête de harpon selon la revendication 1 ou 2, **caractérisée en ce qu'**une arête (24) de la pièce rapportée reliant ladite face inclinée (22) et une surface latérale (26) de ladite pièce est arrondie, et **en ce que** le rayon de ladite arête arrondie est inférieur à deux millimètres.

4. Tête de harpon selon l'une quelconque des revendications précédentes, **caractérisée en ce que** la pièce rapportée (20) est réalisée en un matériau métallique présentant une dureté supérieure à celle du matériau constitutif de la tête de harpon, de préférence en un acier, et de préférence encore en un acier de formule 30CrMo12.

5. Tête de harpon selon l'une quelconque des revendications précédentes, **caractérisée en ce que** l'extrémité distale de la tête de harpon (6) comporte un logement (12) de réception de la pièce rapportée (20).

6. Tête de harpon selon l'une quelconque des revendications précédentes, **caractérisée en ce que** la tête de harpon (6) comporte des moyens de fixation aptes à coopérer avec des moyens de fixation conjugués prévus sur la pièce rapportée (20) pour fixer, de manière interchangeable, la pièce rapportée sur la tête de harpon.

7. Harpon (2) apte à coopérer avec une grille (4) pour un système d'ancrage d'un aéronef, **caractérisé en ce qu'**il comporte une tête de harpon (6) selon l'une quelconque des revendications 1 à 6.

## Claims

1. A harpoon head (6) for a system for anchoring an aircraft on a grating (4), whose distal end is provided with an interchangeable insert (20) having a shape adapted for the harpoon head (6) to be able to slide on an edge surface (40) of the grating (4) to be housed in a cell (4.1, 4.2, 4.3) of the grating, **characterized in that** the insert (20) is cylindrical, and has a beveled end so as to give the insert a tilted contact face (22) with the grating.

2. The harpoon head according to claim 1, **characterized in that** the axis B of the insert is confounded with an axis (A) of the harpoon head.

3. The harpoon head according to claim 1 or 2, **characterized in that** one edge (24) of the insert connecting the tilted face (22) and a lateral surface (26) of the insert is rounded, and **in that** the radius of said rounded edge is smaller than two millimeters.

4. The harpoon head according to any one of the preceding claims, **characterized in that** the insert (20) is made from a metal material having a hardness greater than that of the material making up the harpoon head, preferably a steel, and more preferably made from a 30CrMo12. formula steel.

5. The harpoon head according to any one of the preceding claims, **characterized in that** the distal end of the harpoon head (6) includes a housing (12) tor receiving the insert (20).

6. The harpoon head according to any one of the preceding claims, **characterized in that** the harpoon head (6) comprises a fastening means capable of cooperating with conjugate fastening means provided on the insert (20) to fasten the insert on the harpoon head interchangeably,

7. A harpoon (2) capable of cooperating with a grating (4) for a system for anchoring an aircraft, **characterized in that** it includes a harpoon head (6) according to any one of claims 1 to 6.

## Patentansprüche

1. Harpunenkopf (6) für ein System zum Verankern eines Luftfahrzeugs auf einem Gitter (4), von welchem ein distales Ende mit einem austauschbaren Einsatzstück (20) versehen ist, aufweisend eine angepasste Form, damit der Harpunenkopf (6) über eine Kantenfläche (40) des Gitters (4) gleiten kann, um sich in einer Kammer (4.1, 4.2, 4.3) des Gitters festzusetzen, **gekennzeichnet dadurch, dass** das Einsatzstück (20) zylindrisch geformt ist und ein Ende hat, das derart abgeschrägt ist, dass das Einsatzstück mit einer schrägen Vorderseite (22) versehen ist zum Berühren des Gitters.

2. Harpunenkopf gemäß Anspruch 1, **gekennzeichnet dadurch, dass** die Achse B des Einsatzstücks mit einer Achse (A) des Harpunenkopfs zusammenfällt.

3. Harpunenkopt gemäß Anspruch 1 oder 2, **gekennzeichnet dadurch, dass** eine Kante (24) des Einsatzstücks, welche die geneigte Vorderseite (22) und eine Seitenfläche (26) des Einsatzstückes verbinder, abgerundet, ist, und dadurch, dass der Radius der abgerundeten Kante weniger als zwei Millimeter beträgt.

4. Harpunenkopf gemäß irgendeinem der vorhergehenden Ansprüche, **gekennzeichnet dadurch, dass** das Einsatzstück (20) aus einem metallischen Material hergestellt ist, das eine größere Härte aufweist, als das Material, aus dem der Harpunenkopf gebildet ist, vorzugsweise aus Stahl ist, und außerdem vorzugsweise aus Stahl der Formel 30CrMo12 ist.

5. Harpunenkopf gemäß irgendeinem der vorhergehenden Ansprüche, **gekennzeichnet dadurch, dass** das distale Ende des Harpunenkopfes (6) einen Aufnahmesitz (12) zum Aufnehmen des Einsatzstücks (20) aufweist.

6. Harpunenkopf gemäß irgendeinem der vorhergehenden Ansprüche, **gekennzeichnet dadurch, dass** der Harpunenkopf (6) Befestigungsmittel aufweist die dazu in der Lage sind mit den am Einsatzstück (20) vorgesehenen Befestigungsmitteln zum Verbinden zusammenzuwirken, um das Einsatzstück austauschbar auf dem Harpunenkopf zu befestigen.

7. Harpune (2), die in der Lage ist, mit einem Gitter (4) zusammenzuwirken, für ein System zum Verankern eines Luftfahrzeugs, **gekennzeichnet dadurch, dass** die Harpune einen Harpunenkopf (6) gemäß irgendeinem der Ansprüche 1 bis 6 aufweist.
